# EUROPEAN PATENT APPLICATION

(11) **EP 2 814 142 A2**
(43) Date of publication of application: **17.12.2014**
(21) Application number: 14170543.4
(22) Date of filing: 30.05.2014
(51) Int. Cl.: H02K 1/27

(54) **Electric motor apparatus and vacuum cleaner having the same**

(30) Priority: 11.06.2013 KR 20130066633; 04.12.2013 KR 20130149884
(71) Applicant: Samsung Electronics Co., Ltd, Gyeonggi-do 443-742 (KR)
(72) Inventor: Kim, Kwang Soo, Seoul (KR); Kim, Deok Jin, Gyeonggi-do (KR); Bang, Myung Bae, Gyeonggi-do (KR); Lee, Sung Gu, Gyeonggi-do (KR); In, Byung Ryel, Suwon-si, Gyeonggi-do (KR); Kim, Young Kwan, Anyang-si, Gyeonggi-do (KR)
(74) Representative: Walaski, Jan Filip

(57) **Abstract**

A motor apparatus having a high efficiency and reducing manufacturing cost by using a cost effective ferrite permanent magnet includes a rotatable shaft, a fan connected to one side of the shaft to generate a flow of air, a stator including stator cores arranged in a circumferential direction, and a coil wound around the stator core, and a rotor disposed at an inside of the stator and provided in a form of a cylinder having a passage allowing the shaft to pass through the rotor includes a rotor core provided with a protrusion structure and one or more ferrite magnets coupled to the rotor core to provide a magnetic force. By using a ferrite magnet, when compared to a conventional universal motor, a superior efficiency is obtained, and when compared to a BLDC motor using a Nd magnet, a low cost BLDC motor is implemented.

## Description

The present invention relates to a motor and a cleaner having the same, and more particularly, to a motor apparatus configured to use a ferrite permanent magnet.

A motor is an apparatus configured to obtain a rotating force from an electrical energy, and is provided with a stator and a rotor. The rotor is composed in a way to interact with each other in an electro-magnetic manner, and is rotated by a force acting in between a magnetic field and the current flowing at a coil.

In general, a driving motor used in a conventional cleaner is implemented using a universal motor. The universal motor is not needed to be provided with a controller, and high-price components are not being used, and thus the price of the universal motor is less expensive. However, at the universal motor, a commutator and a brush are needed to be used, and by using the apparatuses as such, the efficiency of the motor is decreased, and the lifespan of the motor is limited.

In recent years, following the worldwide trends in strengthening energy regulation, new energy rating standards are established in the field of the cleaner, and thus the needs for decreasing energy consumption and increasing system efficiency are present.

According to the above, a research on a BLDC (brushless DC) motor in which a permanent magnet is being used is being actively performed. As a result, the BLDC motor applied with a Nd magnet having high energy density and a superior structural strength is developed. However, since the Nd magnet having high-price rare-earth elements is being used, the BLDC motor becomes a high-price product when compared to the conventional universal motor.

In addition, following the demand for high efficiency and the miniaturization of the motor, a development of a fan, a main factor in determining the size of an outer diameter of the motor, is being actively performed. When the same load is provided, the size of the fan is decreased as the motor is driven at high speed, and while corresponding to the high-speed driving motor as such, a high-speed driving fan is developed. However, a slip between the high-speed driving fan and a shaft is being discussed as an issue. A D-cut shape of the shaft, which is to prevent the slip in a conventional manner, is resulted in an imbalance with respect to a center of rotation, and thus an adverse effect is brought to the performance of the high-speed driving motor.

Therefore, the foregoing described problems may be overcome and/or other aspects may be achieved by one or more embodiments of a motor having high efficiency and low price by using a low-price ferrite permanent magnet.
the foregoing described problems may be overcome and/or other aspects may be achieved by one or more embodiments an effective mounting structure to prevent a slip between a high-speed driving fan and a shaft.

Additional aspects and/or advantages of one or more embodiments will be set forth in part in the description which follows and, in part, will be apparent from the description, or may be learned by practice of one or more embodiments of disclosure. One or more embodiments are inclusive of such additional aspects.
according to one or more embodiments, a motor apparatus may include a shaft, a fan, a stator, and a rotor. The shaft may be rotatably installed. The fan may be connected to one side of the shaft to generate a flow of air. The stator may include a stator core arranged in a circumferential direction, and a coil wound around the stator core. The rotor may be disposed at an inside of the stator and provided in a form of a cylinder having a passage at a main axis thereof allowing the shaft to pass therethrough. The rotor may include a rotor core provided with a protrusion structure and one or more ferrite magnets coupled to the rotor core to provide a magnetic force.

The protrusion structure may include a plurality of protrusions protruded in a radially outward direction from a center of rotation of the rotor core, to obtain an additional reluctance force while the rotor is being rotated.

The rotor core may be formed to have two protrusions of the plurality of protrusions disposed opposite to each other with respect to the center of rotation of the rotor core.

The ferrite magnet may be coupled to between each of the plurality of protrusions.

The protrusion may be provided in a fan-like shape having an outer arc larger than an inner arc, and the ferrite magnets may be coupled to the rotor core while interposing the protrusion therebetween, so that the rotor has a ring shaped cross section.

An external appearance of the rotor core which is provided between the protrusions may have an elliptical shape, and the ferrite magnets may be provided while corresponding to the elliptical shape of the rotor core, so that the rotor has a ring shaped cross section.

The rotor core may be provided with a multiple-step structure at a surface thereof making contact with the ferrite magnet such that an adhesive may be inserted into the surface to couple the rotor core to the ferrite magnet though the adhesive.

The rotor may be provided at an outer surface thereof with a restraining structure to couple the ferrite magnet to the rotor core.

The rotor may be provided at both end portions thereof with balance structures that may be processed to adjust rotational balance thereof.

The motor apparatus may further include a groove at an end portion of the rotor, and a protrusion at the balance structure while corresponding to the groove, whereby the balance structure may be coupled to the end portion of the rotor as the protrusion is inserted into the groove.

The stator core may include a plurality of slots, and a coil maybe wound around each of the plurality of slots.

The plurality of slots may include three slots.

An outside of the stator may have a polygonal shape allowing suctioned air to be circulated.

The outside of the stator may have a hexagonal shape.

The outside of the stator may have a convexo-concave structure formed at each vertex thereof such that the stator may be fixed to an outside structure.

The fan may be provided with an inner circumference passing through a central portion thereof such that the fan may be connected to the shaft. The shaft may pass through the inner circumference from a lower portion of the inner circumference to an upper portion of the inner circumference so that an end of the shaft may be connected to a nut at the upper portion of the inner circumference. The inner circumference may include a concavo-concave shape to possibly prevent a slipping of the shaft.

The nut may have at least one portion thereof inserted into the upper portion of the inner circumference, and the inner circumference may have a groove corresponding to a shape of the nut.

The nut and the upper portion of the inner circumference may include a protrusion and a groove corresponding to the protrusion, respectively, so that the nut and the upper portion of the inner circumference may be fixedly coupled to each other.

The nut may be provided with two protrusions protruding in a same direction at opposite sides to each other with respect to a center of the nut. The upper portion of the inner circumference may include grooves corresponding to the protrusions, respectively, so that the nut and the fan may be coupled to each other as the protrusions are inserted into the grooves.

In accordance with one or more embodiments, a cleaner having a body forming an external appearance thereof and provided at an inner side thereof with a motor apparatus to generate a suction force and a brush head having a predetermined length to make contact with a surface to be cleaned, the motor apparatus may include: a shaft that may form a central axis; a motor cover that may have an inlet hole to suction air; a fan that may be connected to one side of the shaft and located adjacent to the motor cover; a rotor that may have a ferrite magnet coupled to a rotor core with a protrusion structure and rotatably installed at the shaft; and a stator that may be circumferentially coupled to the rotor and that may have a coil wound therearound.

The protrusion structure may include a plurality of protrusions protruded in a radially outward direction from a center of rotation of the rotor core, so that an additional reluctance force may be obtained while the rotor is being rotated. The ferrite magnet may be coupled to the rotor core while positioned between each of the plurality of protrusions, thereby forming the rotor in a form of a cylinder provided at a main axis thereof with a passage for connection to the shaft.

The ferrite magnet may have a cross section increasing as the ferrite magnet becomes more distant from the protrusion in a rotational direction of the rotor.

An outside of the stator may be provided in a polygonal shape to form a space allowing suctioned air to be circulated.

The fan may be provided at a center thereof with an inner circumference allowing the shaft to be inserted thereinto. The shaft may pass through the inner circumference so as to have an end thereof connected to a nut at an upper portion of the inner circumference. The upper portion of the inner circumference may have a groove. The nut may have a protrusion structure corresponding to the groove, so that the nut may be fixed to the fan as the protrusion structure is inserted into the groove.

These and/or other aspects will become apparent and more readily appreciated from the following description of embodiments, taken in conjunction with the accompanying drawings in which:
FIG. 1 is a drawing illustrating a cleaner having a motor apparatus in accordance with one or more embodiments.
FIG. 2 is a drawing illustrating an exploded view of a motor apparatus in accordance with one or more embodiments.
FIG. 3 and FIG. 4 are drawings illustrating a rotor of a motor apparatus in accordance with one or more embodiments.
FIG. 5 is a drawing illustrating a stator of a motor apparatus in accordance with one or more embodiments.
FIG. 6 is a drawing illustrating a coupling of a rotor and a stator of a motor apparatus in accordance with one or more embodiments.
FIG. 7 is a drawing illustrating a coupling of a rotor and a stator of a motor apparatus in accordance with one or more embodiments.
FIG. 8 and FIG. 9 are drawings illustrating a fan, a nut, and the shaft of a motor apparatus in accordance with one or more embodiments.
FIG. 10 is a drawing illustrating a fan and a nut of a motor apparatus in accordance with one or more embodiments.

Reference will now be made in detail to one or more embodiments, illustrated in the accompanying drawings, wherein like reference numerals refer to like elements throughout. In this regard, embodiments of the present invention may be embodied in many different forms and should not be construed as being limited to embodiments set forth herein, as various changes, modifications, and equivalents of the systems, apparatuses and/or methods described herein will be understood to be included in the invention by those of ordinary skill in the art after embodiments discussed herein are understood. Accordingly, embodiments are merely described below, by referring to the figures, to explain aspects of the present invention.

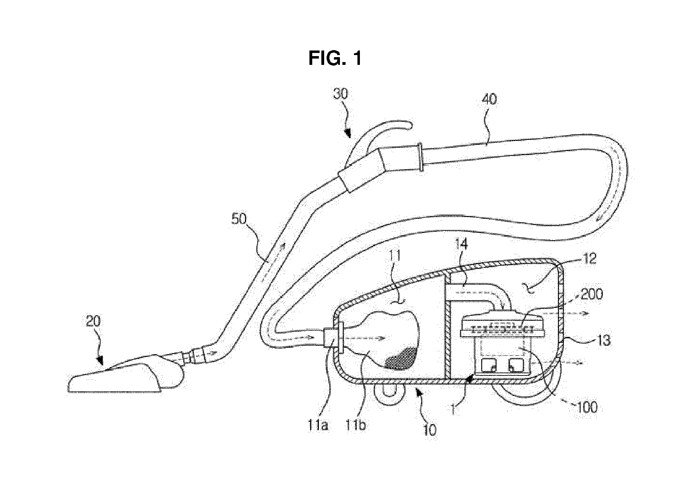

FIG. 1 is a drawing illustrating a cleaner having a motor apparatus in accordance with one or more embodiments.

In accordance with one or more embodiments, a cleaner may include a body 10 to form an exterior appearance, a brush head 20 that may make contact with a surface at which a cleaning takes place, a handle 30, and a connecting hose 40 tat may connect the handle 30 to the body 10.

The brush head 20 may be a portion through which the air having dust is initially introduced while making contact with the surface at which a cleaning takes place. The brush head 20 may be formed in a rectangular parallelepiped shape with a predetermined length. At a lower surface of the brush head 20, a brush configured to separate dust from the surface intended to be cleaned may be provided.

The handle 30 may be provided for a user to easily move a connecting pipe 50 and the brush head 20. At the handle 30, a plurality of manipulation buttons that may be configured to select the operation of the cleaner may be provided.

The connecting hose 40 may enable a cleaning to be performed in a different area within a certain range from the body 10 by moving the brush head 20 and the connecting pipe 50, without needing to move the body 10. For the above, the connecting hose 40 may be formed of elastically deformable material such as plastic.

The body 10 may be provided at an inside thereof with a dust collecting compartment 11 in which a collection of dust may take place, and a driving compartment 12 to generate a suction force.

At the dust collecting compartment 11, an inlet hole 11a configured to suction the air having dust to an inside the body 10 may be provided. The connecting hose 40 may be connected to an outer side of the inlet hole 11a. At an inner side of the inlet hole 11a, a dust bag 11b may be provided to collect dust from the air introduced through the connecting hose 40.

At the driving compartment 12, a motor 100 generating a rotating force, and a fan 200 generating a suction force while rotated by the motor 100 may be provided. At one side of the driving compartment 12, a discharging hole 13 may be provided to discharge air from which dust is eliminated.

By the fan 200 generating a suction force, the air inlet to the brush head 20 may be introduced to the body 10 after passing through the connecting hose 40. The air may be passed through the inlet hole 11b connected to the connecting hose 40, and may be exited to an outside through the discharging hole 13 after entering into a pipe 14 connected to the driving compartment 12.

The motor 100, the fan 200, and an installation configured to assemble the motor 100 and the fan 200 are referred to as a motor apparatus 1.

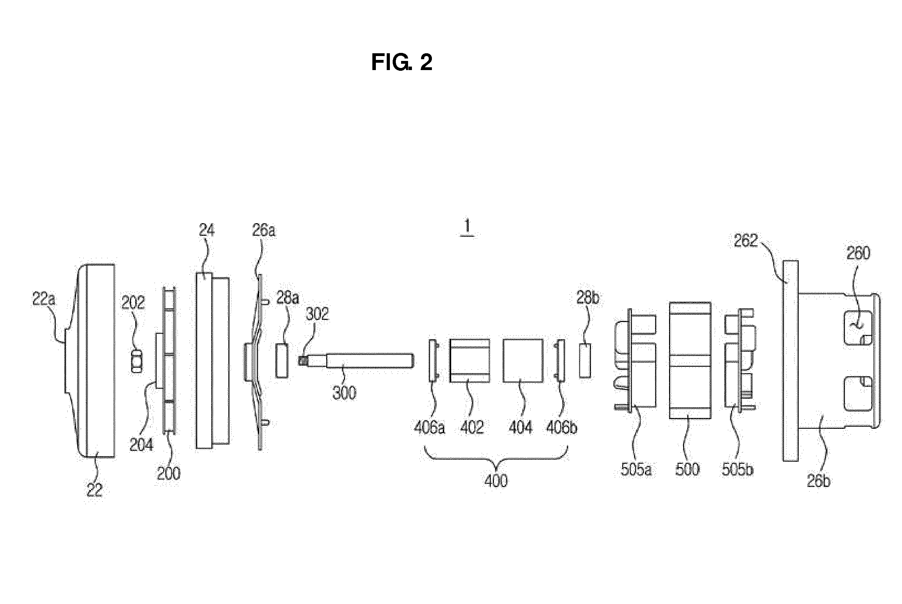

FIG. 2 is a drawing illustrating an exploded view of a motor apparatus 1 in accordance with one or more embodiments.

The motor apparatus 1 may be mounted at the driving compartment 12 of the cleaner while having a motor cover 22 that may be provided at an upper side thereof and a lower housing 26b that may be provided at a lower side thereof. Starting with the motor cover 22, the description will be provided in the order of illustration on FIG. 2.

The motor cover 22 may be configured to keep the fan 200 in an air tightened state by covering the fan 200. The motor cover 22 may have a circular shape to cover the fan, and may be provided at the center thereof with a hole 22a. Through the hole 22a provided at the center of the motor cover 22, air may be entered to an inside the motor apparatus 1.

A nut 202 may connect the fan 200 to a shaft 300. The fan 200 may be provided with an inner circumference 204 passing through a center portion thereof so that the shaft 300 may pass through the inner circumference 204. The nut 202 may be coupled to an end 302 of the shaft 300 that may be passed through the inner circumference 204 of the fan 200, thereby connecting the fan 200 to the shaft 300. The nut 202 may be capable of closely connecting the fan 200 driven at high speed to the shaft 300.

The fan 200 may be capable of generating the flow of air by suctioning air from the hole 22a of the motor cover 22. The fan 200 being used at the cleaner may be provided with the structure having a wide lower portion thereof and a narrow upper portion thereof.

A diffuser 24 may be configured to perform as a guide to properly adjust the flow of air generated from the fan 200 to show desired flow performance. The diffuser 24 may be referred to as a fan guide.

An upper housing 26a may be provided as a supporting unit of a bearing 28 and a settling unit of the diffuser 24. The upper housing 26a, in a case when viewed from a front side thereof, may be provided with the shape of a ribbon. As end portions of the upper housing 26a are connected to the lower housing 26b, the closeness of a rotor 400 and a stator 500 may be maintained.

The bearing 28 may be configured to fix the rotor 400 connected to the shaft 300 at a certain position. The bearing 28 may include an upper bearing 28a and a lower bearing 28b provided in a pair at both sides of the rotor 400.

The shaft 300 may be rotatably installed to deliver a driving force to the fan 200 or the rotor 400. The shaft 300 may have a shape of a bar penetrating a center of the motor apparatus 1, and may have the fan 200 connected to the end 302. The rotor 400 may be assembled to the shaft 300, and at the both ends of the rotor 400, the bearing 28 may be positioned, so that a smooth rotational motion may take place.

The rotor 400 may include a rotor core 402 inserted into the shaft 300, a ferrite magnet 404 providing a magnetic force, and a balance structure 406 to balance the rotor 400. At a central portion of a main axis thereof in an overall manner, the rotor 400 may include the shape of a cylinder provided with a passage through which the shaft 300 may be penetrated.

The balance structure 406 may be capable of reducing an imbalance generated when the rotor 400 is rotated while coupled to the rotor core 402. The balance structure 406 may include a first balance 406a and a second balance 406b that may be attached to each end surfaces of the rotor 40, respectively. Since the balance structure 406, which may be processed, may be attached to the rotor 400 which may be difficult to be processed, the balance of the rotor 400 may be adjusted by processing the balance structure 406.

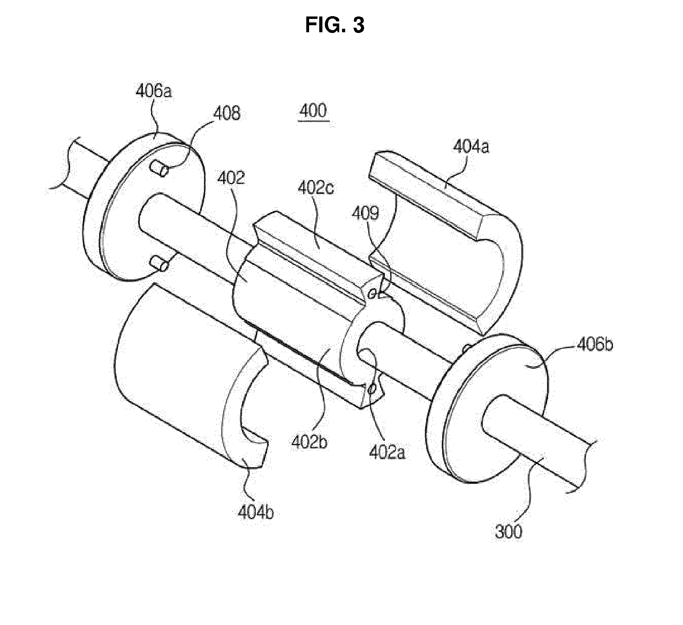

The rotor core 402 may be provided at a central portion thereof with a hole 402a (FIG. 3) allowing the shaft 300 to penetrate therethrough, so that the rotor core 402 may be connected to the shaft 300. The ferrite magnet 404 may be coupled to side surfaces 402b (FIG. 3) of the rotor core 402. The ferrite magnet 404 may be provided in pair, that is, a first ferrite magnet 404a and a second ferrite magnet 404b attached to both side surfaces 402b (FIG. 3) of the rotor core 402.

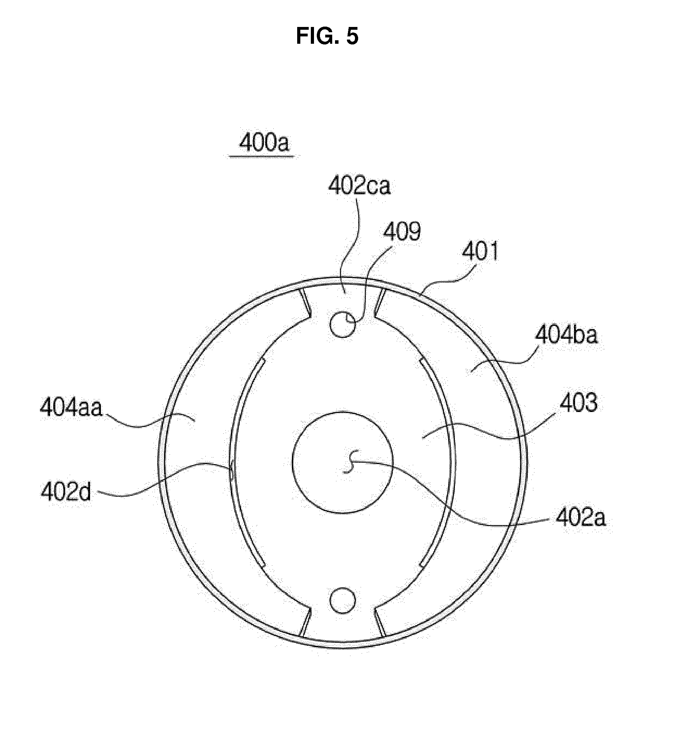

The stator 500 may include a stator core 502 (FIG. 5) to form a frame thereof, and a coil 504 (FIG. 5) that may be wound around the stator core 502. The stator 500 may be provided at a central portion thereof with a space capable of accommodating the rotor 400.

An insulator 505 may be formed of a material having electrical insulation characteristic. The insulator 505 may include a first insulator 505a and a second insulator 505b that may be assembled to both sides of the stator 500.

Lastly, the lower housing 26b may be provided with a structure allowing the components connected to the shaft 300, such as the stator 500, to be mounted thereon. The lower housing 26b, which may have the shape of a hat, may be provided with one side thereof wide open to form an opening 262, while the other side thereof may be closed. The opening 262 may be connected to the upper housing 26a to have the installations, which may be mounted at an inside, sealed. The lower housing 26b may be provided with a plurality of openings 260, so that air passed through the motor apparatus 1 may be discharged through the plurality of openings 260.

A universal motor is a type of a DC motor, and the direction of a current applied to each coil is needed to be changed according to the rotational motion of a rotor, and thus the universal motor is needed to be provided with a commutator and a brush structure. However, a brushless DC (BLDC) motor using a permanent magnet is not provided with a commutator and a brush structure included thereto.

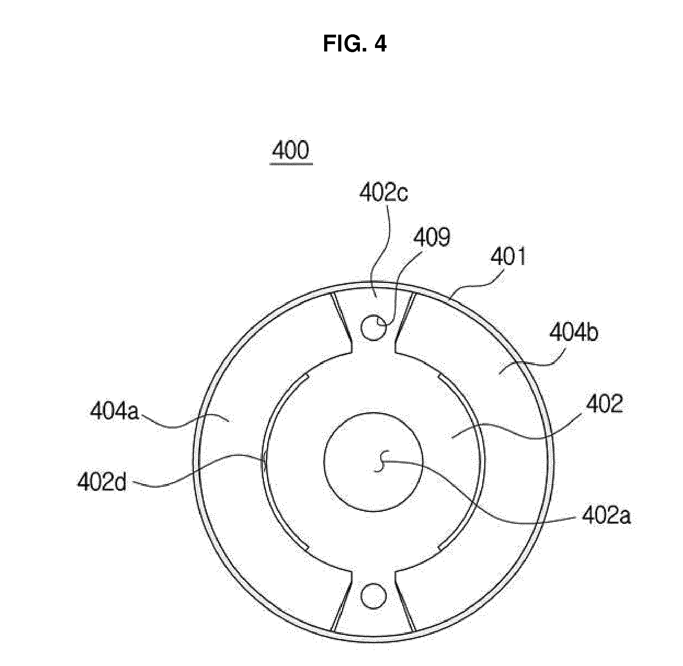

FIG. 3 and FIG. 4 are drawings illustrating a rotor 400 of a motor apparatus 1 in accordance with one or more embodiments.

As illustrated on FIG. 3, the rotor 400 may include the rotor core 402, the first ferrite magnet 404a, the second ferrite magnet 404b, the upper balance 406a, and the lower balance 406b.

The rotor core 402 may be provided with the shaft 300 inserted into a central portion 402a thereof, and the side surface 402b may be coupled to the ferrite magnet 404. The rotor core 402 may be formed of an electrical steel plate. The rotor core 402 may be designed in bipolarity by considering the wearing of metal as a result of high-speed driving and the switching frequency of a controller.

The rotor core 402 may be configured to form a protrusion structure to generate additional reluctance torque. That is, the performance of the ferrite magnet lower than an Nd magnet and the decrease of torque as the result of use of the ferrite magnet may be compensated by the protrusion structure of the rotor core 402. The protrusion structure may be formed in a protruded manner from a center of rotation, so that an additional reluctance torque may be obtained as the rotor 400 is rotated. That is, by a plurality of protrusions 402c protruded from the central portion of the rotor core 402 in a radially outward direction, the protrusion structure may be formed. The protrusion 402c may be provided in a fan-like shape having an outer arc larger than an inner arc. At an outer circumferential surface of the rotor core 402, the two protrusions 402c may be protrudedly formed in a way the two protrusions 402c are disposed opposite to each other with respect to the center of rotation of the rotor 400. As illustrated on FIG. 4, the cross section of the rotor core 402 may be approximately provided in the form of a torus having an opening t at the central portion 402a.

The rotor core 402 may include a multiple-step structure at the side surface 402b making contact with the ferrite magnet 404. As the multiple-step structure is formed, a micro-small space 402d may be provided in between the rotor core 402 and the ferrite magnet 404. The micro-small space 402d as such may be occupied by substance needed to couple the rotor core 402 to the ferrite magnet 404. The rotor core 402 and the ferrite magnet 404 may be coupled to each other by using an adhesive.

The first ferrite magnet 404a and the second ferrite magnet 404b may be coupled to the rotor core 402 while surrounding the both side surfaces 402b of the rotor core 402. The ferrite magnet 404 may be positioned in between the protrusions 402c of the rotor core 402. As illustrated on FIG. 3, the first ferrite magnet 404a and the second ferrite magnet 404b may be coupled to the rotor core 402 while having the protrusion 402c therebetween. After the first ferrite magnet 404a and the second ferrite magnet 404b are coupled to the rotor core 402, the cross section of the rotor 400 may form the shape of a ring.

The magnetizing direction of the ferrite magnet 404 may be in parallel direction or in radial direction. However, in the sinusoidal aspect of an air gap flux density, the parallel direction of magnetization may be preferred.

As illustrated on FIG. 4, the rotor 400 having the rotor core 402 coupled to the ferrite magnet 404 may be provided at an outer circumferential surface thereof with a restraining structure 401. The restraining structure 401 may be configured to fix the ferrite magnet 404 coupled to the rotor core 402, so that the ferrite magnet 404 is not scattered. The restraining structure 401 may be composed of, for example, structural steel such as stainless steel (SUS), thermal contracting tube, or high-strength plastic or the like.

The balance structure 406 is referred to as a processable part that may be attached to the rotor 400 to balance the rotating rotor 400. As the balance structure 406 is processed by a cutting work, the rotational balance of the rotor 400 having the balance structure 406 may be adjusted. The balance structure 406 may be provided in the shape of a cylinder having the same size of the end portion of the rotor 400 illustrated on FIG. 4. As illustrated on FIG. 3, the upper balance 406a and the lower balance 406b may be attached to both end portions of the rotor 400 while facing each other. As a groove 409 that may be included in the end portion of the rotor 400 and a protrusion 408 that may be included in the balance structure 406 are coupled to each other, the rotor 40 and the balance structure 406 may be coupled to each other. As illustrated on FIG. 3, the rotor core 402 may have a total of two grooves 409. The balance structure 406 may have a total of the two protrusions 408 corresponding to the grooves 409, respectively. As the protrusions 408 formed at the balance structure 406 are inserted into the grooves 409 of the rotor 400, the balance structure 409 and the rotor 400 may be coupled to each other. The upper balance 406a and the lower balance 406b may be inserted around the shaft 300 in a way that the surfaces having the protrusions 408 head toward the rotor 400.

FIG. 5 is a drawing illustrating a rotor 400a of a motor apparatus 1 in accordance with one or more embodiments.

The performance of a ferrite magnet lower than a Nd magnet and a decrease of torque as a result of the use of the ferrite magnet may be compensated by the protrusion structure of the rotor core 402, but a ferrite magnet has a magnetic flux density and a coercive force that are lower than those of a Nd magnet, having inefficiency in demagnetization. In particular, a ferrite magnet has low temperature demagnetization, and thus is resistant to becoming demagnetized during rotation. Hereinafter, a structure to compensate for such a weakness of the ferrite magnet will be described.

Although an external appearance of the rotor core 402 provided between the protrusions 402c of FIG. 4 may have a circular shape, an external appearance of a rotor core 403 that may be provided between protrusions 402ca of FIG. 5 may have an elliptical shape. Ferrite magnets 404aa and 404ba may be provided while corresponding to the elliptical shape of the rotor core such that the rotor 400a has a ring shaped cross section.

That is, the ferrite magnets 404aa and 404ba may have cross sections that are increasing as the ferrite magnets 404aa and 404ba become more distant from the protrusion 402ca. In addition, the protrusion 402ca may protrude from the center of rotation by a length smaller than that of the protrusion 402c. Having the magnets 404aa and 404ba having inconstant cross sections may distribute the flow of magnetic flux, so that distribution of the magnetic flux may be increased. Accordingly, demagnetization caused by magnetic flux concentrated may be prevented.

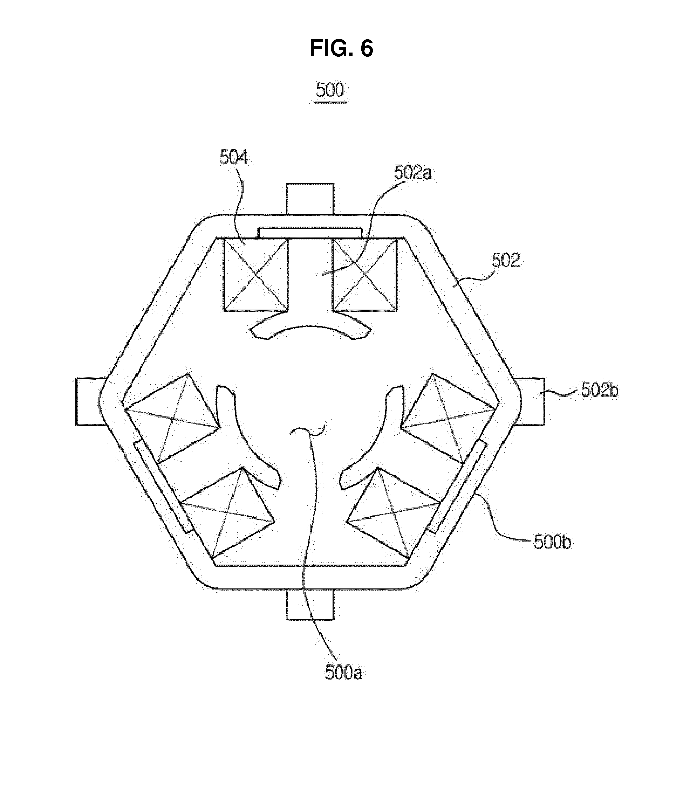

FIG. 6 is a drawing illustrating a stator 500 of a motor apparatus 1 in accordance with one or more embodiments.

The stator 500 may include a stator core 502 forming a frame thereof, and a coil 504 wound around the stator core 502. The stator 500 may be provided at an inside 500a thereof having a structure into which the rotor 400 may be inserted. An outside 500b of the stator 500 may include a frame of the stator core 502.

A space between the inside 500a and the outside 500b may be divided by a plurality of slots 502a. The coil 504 may be wound around each of the plurality of slots 502a. The coil 504 may be wound in a concentrated winding scheme. The coil 504 may include, for example, copper, aluminum, or the like, or a combination of these.

The plurality of slots 502a may include, for example, a total of three slots 502a. The number of the slots 502a may be provided in minimum, to ensure a space allowing air generated from the fan 200 to pass therethrough. Air may pass through between each coil 504 wound around the slot 502a.

The outside 500b of the stator 500 may have a polygonal shape. The stator 500 having a polygonal shape may be fixed in a space of the lower housing 26b having a circular shape, to form a marginal space that may serve as an air passage. The outside 500b may be provided in a hexagonal shape.

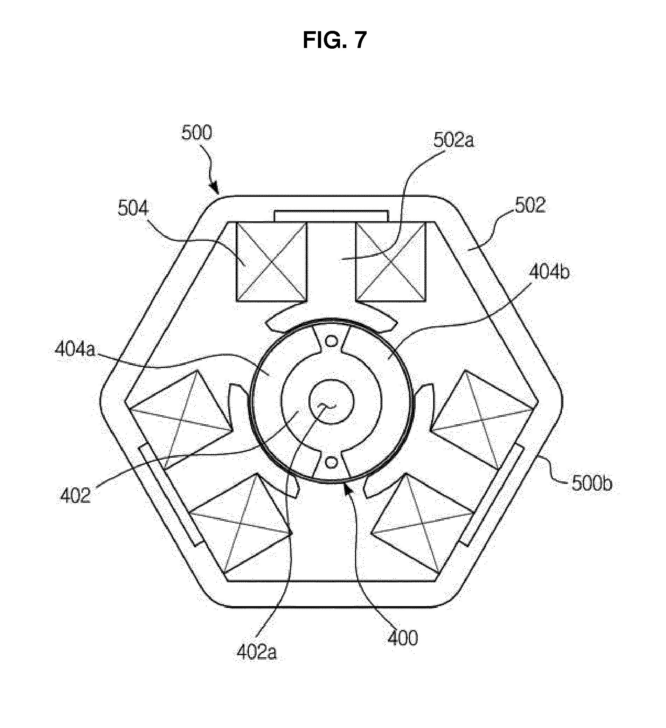

The outside 500b of the stator 500 may include a convexo-concave structure configured to assemble the stator 500 to the lower housing 26b. The convexo-concave structure may be provided as a protrusion 502b formed at each corner of the outside 500b. The protrusion 502b formed at each corner of the polygonal outside 500b of the stator 500 may allow the stator 500 to be fixed to the lower housing (26b in FIG. 2). FIG. 7 is a drawing illustrating a coupling of a rotor 400 and a stator 500 of the motor apparatus 1 in accordance with one or more embodiments.

The rotor 400 may be inserted into the inside 500a of the stator 500. At the central portion 402a of the rotor 400, the shaft 300 may be positioned. As the rotor core 402 is mounted at the shaft 300, and the ferrite magnet 404 is coupled while surrounding the rotor core 402. The restraining structure 400a may be coupled to the upper sides of the ferrite magnet 404 and the rotor core 402, so that the rotor core 402 and the ferrite magnet 404 may be closely coupled to each other. Then, the stator core 502 may be positioned, and the coil 504 may be wound around the slot 502a of the stator core 502. The outside 500b of the stator 500 may be provided with the shape of a polygon.

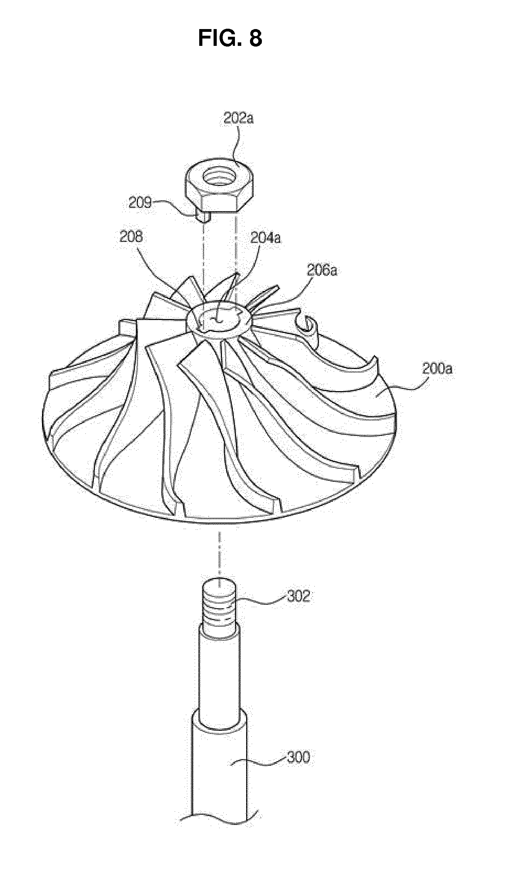

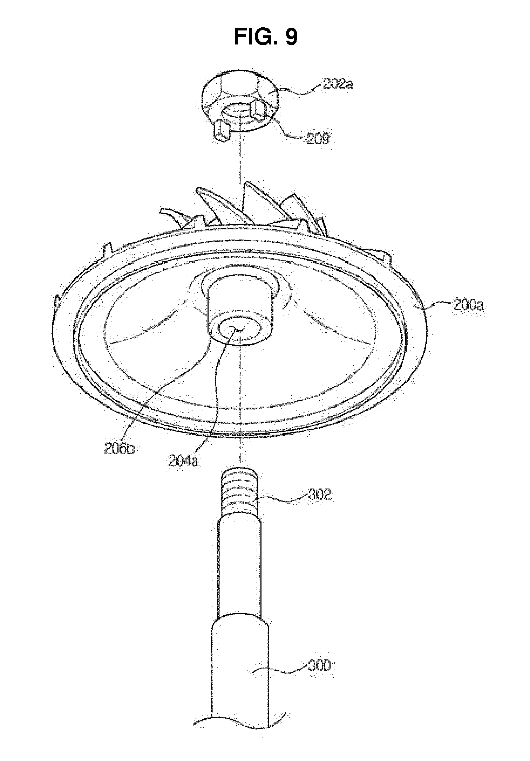

FIG. 8 and FIG. 9 are drawings illustrating a fan 200a, a nut 202a, and a shaft 300 of a motor apparatus 1 in accordance with one or more embodiments.

The motor apparatus 1 may use the fan 200a capable of rotating at high speed. The fan 200a may be provided in a 3-dimensional shape. In a case when using the fan 200a capable of rotating at high speed, the coupling structure is highly regarded than in the case of using a conventional fan. Particularly, slipping between the shaft 300 and the fan 200a may be prevented. Conventionally, as to prevent slipping, by adding a mounting structure at a lower surface of a fan, the shaft and the fan may be coupled to each other. To this end, the shaft 300 may be subject to a d-cut processing, which results in an asymmetrical structure that increases imbalance during rotation of the shaft. An apparatus according to the present disclosure may be capable of preventing the slipping by use of the nut 202a, which may be obtained by deforming a conventional fixing nut, without using the additional mounting structure.

The fan 200a may be provided at a central portion 204a with an inner circumference that may allow the shaft 300 to pass therethrough. The shaft 300, by passing through from a lower portion 206b of the inner circumference to an upper portion 206a of the inner circumference of the fan 200a, may be fixedly coupled to the nut 202a at the upper portion 206a of the inner circumference of the fan 200a. At this time, the upper portion 206a of the inner circumference may be provided with a shape having a convexo-concave formed on a conventional cylindrical structure. As illustrated on FIG. 8, the upper portion 206a of the inner circumference connected to the nut 202a may be provided with a shape that includes a groove 208.

The upper portion 206a of the inner circumference may be provided with the total of two grooves 208 that may be formed at opposite sides to each other with respect to the center of the upper portion 206a. At the nut 202a, two protrusions 209 may protrude in the same direction while corresponding to the two grooves 208. As the protrusions 209 of the nut 202a are inserted into the grooves 208 provided at the upper portion 206a of the inner circumference, the nut 202a may be fixed to the fan 200a. Alternatively, protrusions may be provided at the upper portion 206a of the inner circumference, and grooves may be provided at the nut 202a, so that the protrusions and grooves may be fixedly coupled to each other.

As illustrated on FIG. 9, different from the conventional structure of the lower portion of the inner circumference provided with the anti-slip mounting structure, the lower portion 206b of the inner circumference of the fan 202a may be provided with a circular passage that may be easy to process. The shaft 300 may be inserted into the lower portion 206b of the inner circumference, and by passing through the upper portion 206a of the inner circumference, may have the end 302 thereof exposed to the outside and coupled to the nut 202a. At the end 302 of the shaft 300, a screw thread may be formed to be coupled to the nut 202a. As the end 302 of the shaft 300 is coupled to the nut 202a, the shaft 300 and the nut 202a may move in an integral manner.

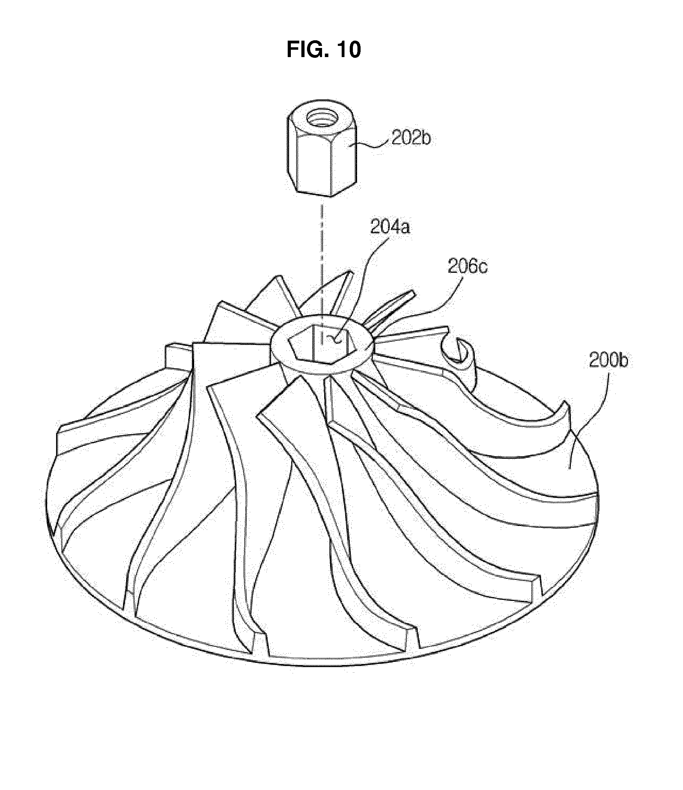

FIG. 10 is a drawing illustrating a fan 200b and a nut 202b of a motor apparatus in accordance with one or more embodiments.

The nut 202b may be inserted into an upper portion 206c of the inner circumference, thereby possibly preventing the fan 200b from slipping from the shaft 300. As shown in FIG. 10, the nut 202b may longitudinally extend, and the upper portion 206c of the inner circumference may be provided with a groove having a shape corresponding to that of the nut 202b.

The nut 202b may be inserted into the upper portion 206c of the inner circumference whose shape may correspond to the shape of the nut 202b, and may be connected to the shaft 300, to prevent a slipping of the shaft 300. The nut 202b may have at least one portion thereof inserted into the upper portion 206c of the inner circumference.

Referring to FIGS. 8 to 10, the nuts 202a and 202b having protrusion structures corresponding to the upper portions 206a and 206c of the inner circumference may be coupled to the upper portions 206a and 206c of the inner circumference, so that the nuts 202a and 202b may be integrally formed with the fan 200a and 200b. That is, the fans 200a and 200b and the shaft 300 may be integrally connected to one another through the nuts 202a and 202b, thereby possibly preventing a slipping of the shaft 300.

As to describe the assembly of the motor apparatus 1 as a whole, the first ferrite magnet 404a and the second ferrite magnet 404b may be coupled to the side surfaces 402b of the rotor core 402, respectively. Then, the first balance 406a and the second balance 406b may be coupled to the both end surfaces of the rotor core 402, thereby forming the rotor 400. The rotor 400 may be inserted into the inside 500a of the stator 500, and the first insulator 505a and the second insulator 505b may be coupled to the both sides of the stator 500. The rotor 400 and the stator 500 coupled to each other may be inserted around the shaft 300, and both ends of the shaft 300 may be fixed by the upper bearing 28a and the lower bearing 28b.The assembly coupled as the above may be inserted into the lower housing 26b, and may be fixed through the convexo-concave structure of the stator 500. The upper housing 26a may be inserted around the shaft 300 connected to the lower housing 26B and protruded toward an opposite side. The upper housing 26a and the lower housing 26b may be connected to each other by use of a coupling tool such as a screw. The end 302 of the shaft 300 may be passed by the diffuser 24 and the fan 200, and then connect to the nut 202. As previously described, the shaft 300 may be integrally connected to the fan 200 through the convexo-concave structure of the nut 202 and the fan 200, and thus slipping may be prevented. Lastly, the motor cover 22 may be closed to maintain a sealing of the motor apparatus 1.

The motor apparatus 1 may represent a driving source inserted into a cleaner to suction and discharge air. While the cleaner is used as an example for the descriptions as such, the motor apparatus 1 may be applied to all the apparatuses that are needed to be provided with a miniaturized, high-speed driving motor, not to mention other various household apparatuses such as a hand drier.

As is apparent from the above, the use of a ferrite magnet can provide a superior efficiency when compared to a conventional universal motor, and also enable implementation of a low cost BLDC motor.

In addition, by forming a convexo-concave structure configured to prevent a slipping of a high-speed driving fan and a shaft, a decrease of an overall material cost and performance reliability may be secured.

While aspects of the present invention have been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments. Suitable results may equally be achieved if the described techniques are performed in a different order and/or if components in a described system, architecture, device, or circuit are combined in a different manner and/or replaced or supplemented by other components or their equivalents.

Thus, although a few embodiments have been shown and described, with additional embodiments being equally available, it would be appreciated by those skilled in the art that changes may be made in these embodiments without departing from the principles of the invention, the scope of which is defined in the claims.

## Claims

1. A motor apparatus, comprising:
a rotatable shaft;
a fan connected to one side of the shaft to generate a flow of air:
a stator including a stator core arranged in a circumferential direction, and a coil wound around the stator cores; and
a rotor disposed at an inside of the stator and provided in a form of a cylinder having a passage at a main axis thereof allowing the shaft to pass therethrough,
wherein the rotor comprises a rotor core provided with a protrusion structure and one or more ferrite magnets coupled to the rotor core to provide a magnetic force.

2. The motor apparatus of claim 1, wherein:
the protrusion structure comprises a plurality of protrusions protruded in a radially outward direction from a center of rotation of the rotor core, to obtain an additional reluctance force while the rotor is being rotated.

3. The motor apparatus of claim 2, wherein:
the ferrite magnet is coupled to between each of the plurality of protrusions.

4. The motor apparatus of claim 3, wherein:
the protrusion is provided in a fan-like shape having an outer arc larger than an inner arc, and the ferrite magnets are coupled to the rotor core while interposing the protrusion therebetween, so that the rotor has a ring shaped cross section.

5. The motor of claim 4, wherein an external appearance of the rotor core which is provided between the protrusions has an elliptical shape, and the ferrite magnets are provided while corresponding to the elliptical shape of the rotor core, so that the rotor has a ring shaped cross section.

6. The motor apparatus of any one of the preceding claims, wherein:
the rotor core is provided with a multiple-step structure at a surface thereof making contact with the ferrite magnet such that an adhesive is inserted into the surface to couple the rotor core to the ferrite magnet through the adhesive.

7. The motor apparatus of any one of the preceding claims, wherein:
the rotor is provided at an outer surface thereof with a scattering resistance structure to couple the ferrite magnet to the rotor core.

8. The motor apparatus of any one of the preceding claims, wherein:
the rotor is provided at both end portions thereof with balance structures that are processed to adjust rotational balance thereof.

9. The motor apparatus of claim 8, comprising:
a groove at an end portion of the rotor, and
a protrusion at the balance structure while corresponding to the groove,
whereby the balance structure is coupled to the end portion of the rotor as the protrusion is inserted into the groove.

10. The motor apparatus of any one of the preceding claims, wherein:
an outside of the stator has a polygonal shape allowing suctioned air to be circulated.

11. The motor apparatus of claim 10, wherein:
the outside of the stator has a hexagonal shape.

12. The motor apparatus of any one of the preceding claims, wherein:
the fan is provided with an inner circumference passing through a central portion thereof such that the fan is connected to the shaft;
the shaft passes through the inner circumference from a lower portion of the inner circumference to an upper portion of the inner circumference so that an end of the shaft is connected to a nut at the upper portion of the inner circumference; and
the inner circumference comprises a concavo-concave shape to prevent a slipping of the shaft.

13. The motor apparatus of claim 12, wherein:
the nut has at least one portion thereof inserted into the upper portion of the inner circumference; and
the inner circumference has a groove corresponding to a shape of the nut.

14. The motor apparatus of claim 12, wherein:
the nut and the upper portion of the inner circumference include a protrusion and a groove corresponding to the protrusion, respectively, so that the nut and the upper portion of the inner circumference are fixedly coupled to each other.

15. The motor apparatus of claim 14, wherein:
the nut is provided with two protrusions protruding in a same direction at opposite sides to each other with respect to a center of the nut, and
the upper portion of the inner circumference comprises grooves corresponding to the protrusions, respectively, so that the nut and the fan are coupled to each other as the protrusions are inserted into the grooves.
